# EUROPEAN PATENT SPECIFICATION

(11) **EP 4 502 194 B1**
(45) Date of publication and mention of the grant of the patent: **23.09.2026**
(21) Application number: 22935665.4
(22) Date of filing: 25.11.2022
(51) Int. Cl.: C21D 9/02, B21F 35/00, H05B 1/02, H05B 3/00, F27D 11/04, C21D 1/18, C21D 1/40, C21D 11/00, C21D 9/00

(54) **COIL SPRING HEATING METHOD AND HEATING SYSTEM**
HEIZVERFAHREN UND HEIZSYSTEM FÜR SCHRAUBENFEDERN
MÉTHODE DE CHAUFFAGE ET SYSTÈME DE CHAUFFAGE POUR RESSORT HÉLICOÏDAL

(30) Priority: 30.03.2022 JP 2022057252; 30.03.2022 JP 2022057253
(43) Date of publication of application: 05.02.2025
(73) Proprietor: NHK Spring Co., Ltd., Yokohama-shi, Kanagawa 236-0004 (JP)
(72) Inventor: TAKEDA, Kazuya, Yokohama-shi, Kanagawa 236-0004 (JP); YASUDA, Hiroyuki, Yokohama-shi, Kanagawa 236-0004 (JP); TSUKADA, Kouta, Yokohama-shi, Kanagawa 236-0004 (JP)
(74) Representative: Hoffmann Eitle
(86) International application number: PCT/JP2022/043525
(87) International publication number: WO 2023/188536

(56) References cited:
- WO-A1-2012/014672
- WO-A1-2013/099821
- WO-A1-2013/099821
- JP-A- 2011 195 919
- JP-A- S6 130 246
- JP-A- S6 130 246
- US-A1- 2011 031 666
- US-A1- 2011 031 666
- US-A1- 2013 092 675
- US-B1- 6 235 131

## Description

### Field

The present invention relates to a heating method and a heating system for, for example, hardening a coil spring.

### Background

In a process of manufacturing a coil spring, hardening is performed, conventionally. Hardening is performed for, for example, improving mechanical properties. In a method known as a heating method for hardening, an electrode is connected to an end portion of a coil spring and heating is performed with heat generated by energization (see, for example, JP S61 30246 A). According to JP S61 30246 A, a coil spring is heated by being supported by a support plate and being placed horizontally, with the central axis of the coil spring directed approximately in a horizontal direction.
US 2013/092675 A1 relates to a method for heating an entire spring, including regions adjacent to electrodes attached thereto, in a single electrical heating process including (i) causing at least a pair of electrodes to make contact with the spring, and then (ii) electrically heating the spring by applying a voltage across the pair of electrodes. WO 2013/099821 A relates to a technique for performing an appropriate heat treatment on a portion of a spring material that is in contact with an electrode during resistance heating when the spring material is heat treated by resistance heating.
US 2011/031666 A1 relates to apparatus and method provided for metallurgical heat treatment of coil springs, or similarly shaped workpieces and articles of manufacture, by electric resistance heating along the entire length of the workpiece so that the ends of the workpiece can be heat treated to the same degree and quality as the section of the workpiece between its two ends.

### Summary

### Technical Problem

However, in the heating method disclosed in Patent Literature 1, diameters of coils formed by winding of a wire of the coil spring and/or spaces between the coils may vary largely after the hardening.

The present invention has been made in view of the above and an object thereof is to provide a heating method and a heating system that enable minimization of variation in spaces between coils of a wire of a coil spring and variation in diameters of the coils formed by winding.

### Solution to Problem

The present invention is defined by the independent claims. Optional preferred features are recited in the dependent claims. To solve the above-described problem and achieve the object, a heating method according to the present invention for hardening a coil spring includes: a fixing step of fixing one end of the coil spring to an outer peripheral surface of a first shaft member and fixing another end of the coil spring to an outer peripheral surface of a second shaft member; a heating step of energizing the first and second shaft members to heat up the coil spring; and a rotating step of rotating each of the first and second shaft members in a state where the first and second shaft members are being energized, wherein rotation axes of the first and second shaft members are positioned on a same straight line that is at an angle of 0 degrees or more and 30 degrees or less to a horizontal direction, and a central axis of the coil spring that has been mounted on the first and second shaft members is parallel to the straight line, wherein the coil spring is held only by the first and second shaft members without contacting a support member.

Moreover, in the above-described heating method according to the present invention, the heating step and the rotating step may be stopped based on a set temperature set to a temperature equal to or higher than a transformation temperature of material forming the coil spring.

Moreover, in the above-described heating method according to the present invention, in the rotating step, the first and second shaft members may be rotated at a rotation velocity set based on at least one of variation in spaces between coils of a wire of the coil spring and variation in coil diameters of the coil spring.

Moreover, in the above-described heating method according to the present invention, in the fixing step, the coil spring may be fixed such that the central axis of the coil spring is at a position not aligned with the straight line.

Moreover, a heating system according to the present invention for hardening a coil spring includes: a first shaft member configured to be rotatable about a central axis extending in a longitudinal direction thereof and grasp one end of the coil spring; a second shaft member configured to be rotatable about a central axis extending in a longitudinal direction thereof and grasp another end of the coil spring; and a control apparatus configured to control passage of an electric current through the first and second shaft members and rotation of the first and second shaft members, wherein rotation axes of the first and second shaft members are positioned on a same straight line that is at an angle of 0 degrees or more and 30 degrees or less to a horizontal direction, and a central axis of the coil spring that has been mounted on the first and second shaft members is parallel to the straight line.

Moreover, a heating method according to the present invention for hardening a coil spring includes: a fixing step of placing the coil spring on a support member, fixing one end of the coil spring to an outer peripheral surface of a first shaft member that is rotatable, and fixing another end of the coil spring to an outer peripheral surface of a second shaft member; a heating step of energizing the first and second shaft members to heat up the coil spring; and a rotating step of rotating the first shaft member to move the one end of the coil spring to a preset position, wherein rotation axes of the first and second shaft members are positioned on a same straight line that is at an angle of 0 degrees or more and 30 degrees or less to a horizontal direction, and a central axis of the coil spring that has been mounted on the first and second shaft members and supported by the support member is parallel to the straight line.

Moreover, in the above-described heating method according to the present invention, in the rotating step, the first shaft member may be rotated in a case where a temperature of the coil spring has reached a set temperature set to a temperature equal to or higher than a transformation temperature of material forming the coil spring.

Moreover, in the above-described heating method according to the present invention, in the fixing step, the coil spring is fixed such that the central axis of the coil spring is at a position not aligned with the straight line.

Moreover, a heating system according to the present invention for hardening a coil spring includes: a first shaft member configured to be rotatable about a rotation axis extending in a longitudinal direction thereof and grasp one end of the coil spring; a second shaft member extending in a longitudinal axis direction and configured to grasp another end of the coil spring; and a control apparatus configured to control passage of an electric current through the first and second shaft members and rotation of the first shaft member, wherein a rotation axis of the first shaft member and a longitudinal axis of the second shaft member are positioned on a same straight line that is at an angle of 0 degrees or more and 30 degrees or less to a horizontal direction, a central axis of the coil spring that has been mounted on the first and second shaft members is parallel to the straight line, and the control apparatus is configured to remove restrictions on the rotation of the first shaft member when heating of the coil spring is started, and move the one end of the coil spring to a preset position before a heating process is ended. Advantageous Effects of Invention

The present invention has an effect of enabling minimization of variation in spaces between coils of a wire of a coil spring and variation in diameters of the coils formed by winding.

### Brief Description of Drawings

FIG. 1 is a diagram illustrating a schematic configuration of a heating system according to a first embodiment of the present invention.
FIG. 2 is a diagram for illustration of a configuration of main parts of the heating system according to the first embodiment of the present invention.
FIG. 3 is a flowchart illustrating a heating method according to the first embodiment of the present invention.
FIG. 4 is a flowchart illustrating a heating method according to a first modified example of the first embodiment of the present invention.
FIG. 5 is a flowchart illustrating a heating method according to a second modified example of the first embodiment of the present invention.
FIG. 6 is a diagram illustrating a schematic configuration of a heating system according to a second embodiment of the present invention.
FIG. 7 is a flowchart illustrating a heating method according to the second embodiment of the present invention.
FIG. 8 is a diagram illustrating a schematic configuration of a heating system according to a first modified example of the second embodiment of the present invention.
FIG. 9 is a flowchart illustrating a heating method according to the second modified example of the second embodiment of the present invention.
FIG. 10 is a flowchart illustrating a heating method according to a third modified example of the second embodiment of the present invention.

### Description of Embodiments

Modes for implementing the present invention (hereinafter, referred to as "embodiments") will hereinafter be described by reference to the appended drawings. The drawings are schematic, a relation between a thickness and a width of each portion and ratios among thicknesses of respective portions may be different from the actual relation and ratios, and the drawings may also include a portion that differs in its dimensional relations or ratios among the drawings.

### First Embodiment

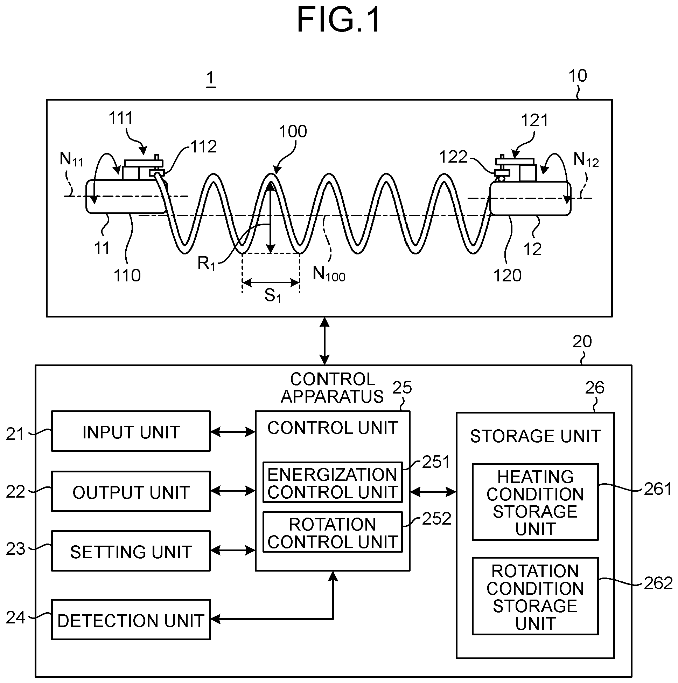

FIG. 1 is a diagram illustrating a schematic configuration of a heating system according to a first embodiment of the present invention. A heating system 1 illustrated in FIG. 1 is, for example, a system for implementing hardening of a coil spring 100. The heating system 1 includes a heating apparatus 10 that holds and heats up the coil spring 100, and a control apparatus 20 that controls the heating apparatus 10. The coil spring 100 is formed of a wire wound spirally about a predetermined axis (N₁₀₀ herein).

The heating apparatus 10 includes a first shaft member 11 and a second shaft member 12.

Under control by the control apparatus 20, the first shaft member 11 rotates about an axis N₁₁ (a rotation axis) passing through the center of a shaft body 110 extending in a cylindrical shape, the axis N₁₁ extending parallel to a longitudinal direction. Furthermore, the first shaft member 11 has, provided therein, a spring holding unit 111 fixed to a lateral surface of the shaft body 110 and configured to hold one end of the coil spring 100. The spring holding unit 111 has, provided therein, a grasping portion 112 configured to have the one end of the coil spring 100 interposed between the grasping portion 112 and an outer peripheral surface of the shaft body 110. The spring holding unit 111 rotates integrally with the shaft body 110.

Under control by the control apparatus 20, the second shaft member 12 rotates about an axis N₁₂ (a rotation axis) passing through the center of a shaft body 120 extending in a cylindrical shape, the axis N₁₂ extending parallel to a longitudinal direction. Furthermore, the second shaft member 12 has, provided therein, a spring holding unit 121 fixed to a lateral surface of the shaft body 120 and configured to hold the other end of the coil spring 100. The spring holding unit 121 has, provided therein, a grasping portion 122 configured to have the other end of the coil spring 100 interposed between the grasping portion 122 and an outer peripheral surface of the shaft body 120. The spring holding unit 121 rotates integrally with the shaft body 120.

A straight line extended from one of the axis N₁₁ of the first shaft member 11 and the axis N₁₂ of the second shaft member 12 toward the other one of the axes N₁₁ and N₁₂ coincides with the other one of the axes N₁₁ and N₁₂. That is, the axis N₁₁ and the axis N₁₂ are positioned on the same straight line. The axis N₁₁ and the axis N₁₂ may be not exactly on the same straight line as long as rotation control of the coil spring 100 is not hindered.

Furthermore, in a state where the coil spring 100 has been grasped by the grasping portions (the grasping portions 112 and 122), the central axis N₁₀₀ of the coil spring 100 is parallel to each of the axis N₁₁ and the axis N₁₂. FIG. 1 illustrates an example where the central axis N₁₀₀ is not aligned with the axis N₁₁ and the axis N₁₂, but the central axis N₁₀₀ may be arranged to coincide with the axis N₁₁ and the axis N₁₂. In a case where the central axis N₁₀₀ is not aligned with the axis N₁₁ and the axis N₁₂, the coil spring 100 rotates about axes parallel to the central axis N₁₀₀ and positioned at positions different from each other. On the contrary, in a case where the central axis N₁₀₀ and the axis N₁₁ and axis N₁₂ are on the same straight line, the coil spring 100 rotates about the central axis N₁₀₀.

An angle of the central axis N₁₀₀ and the axis N₁₁ and axis N₁₂ to a horizontal direction is set to 0 degrees or more and 30 degrees or less. This angle is set according to, for example, properties of the coil spring. The horizontal direction referred to herein is a direction perpendicular to a gravitational direction (vertical direction).

Furthermore, the shaft body 110 of the first shaft member 11 and the shaft body 120 of the second shaft member 12 are formed by use of an electrically conducting material. Furthermore, these shaft bodies and the control apparatus 20 are connected to each other by electric wires not illustrated in the drawings.

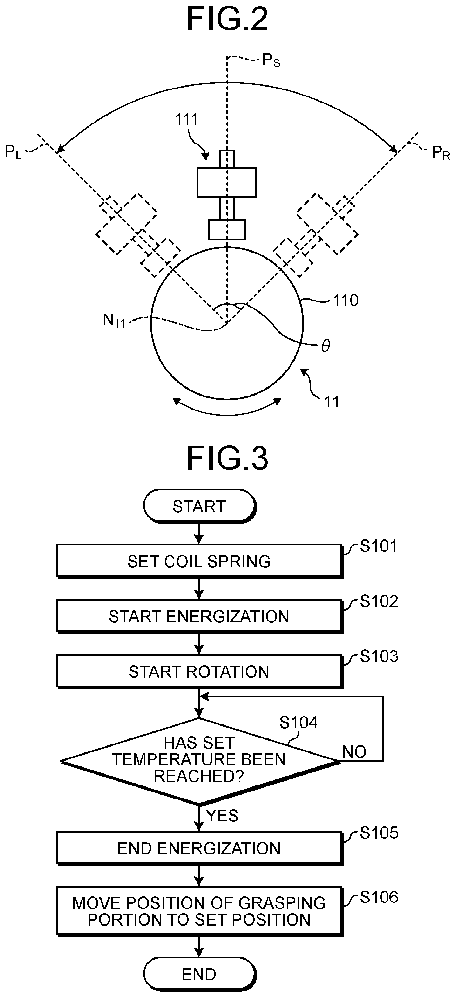

FIG. 2 is a diagram for illustration of a configuration of main parts of the heating system according to the first embodiment of the present invention. FIG. 2 is a diagram illustrating a configuration and operation of a shaft body and a spring holding unit. FIG. 2 illustrates the first shaft member 11, but the second shaft member 12 operates similarly. In response to rotation of the shaft body 110, the spring holding unit 111 also rotates in association with the rotation. In this rotation, under control by the control apparatus 20, the shaft body 110 reciprocates by a rotation angle θ. The spring holding unit 111 reciprocates between a position P_{R} rotated clockwise from a reference position P_{S} by a rotation angle θ/2 and a position P_{L} rotated anticlockwise from the reference position P_{S} by the rotation angle θ/2. In a case where the shaft body 110 and the grasping portion 112 are grasping the coil spring 100, an end portion of the coil spring 100 also moves along an outer circumference of the shaft body 110 in accordance with the rotation of the shaft body 110.

The rotation angle θ is able to be set according to a type of the coil spring 100, and for example, is set to an angle in a range of 90 degrees (± 45 degrees) or more and 360 degrees or less.

The shaft members are configured such that amounts of their rotation are able to be measured by use of encoders, for example.

As illustrated in FIG. 1, the control apparatus 20 includes an input unit 21, an output unit 22, a setting unit 23, a detection unit 24, a control unit 25, and a storage unit 26.

The input unit 21 receives input of various signals related to operation of the heating system 1. The input unit 21 is configured by use of a keyboard, a mouse, a switch, and/or a touch panel, for example.

Under control by the control unit 25, the output unit 22 causes an image to be displayed or causes sound or light to be output. The output unit 22 is configured by use of a display, a speaker, and/or a light source, for example.

The setting unit 23 performs setting of heating conditions. Based on setting information received by the input unit 21 and/or information stored in the storage unit 26, for example, the setting unit 23 sets a heating temperature and a heating time period for the coil spring 100, a rotation angle of the shaft members, a rotation velocity of the shaft members, and electric energy to energize the shaft members.

The detection unit 24 detects a temperature of the coil spring 100. The detection unit 24 may detect a temperature of each of the shaft members.

The control unit 25 controls operation of each component of the heating system 1. Furthermore, the control unit 25 has an energization control unit 251, and a rotation control unit 252. For example, in response to input of an instruction to start a heating process via the input unit 21, the energization control unit 251 starts passing an electric current through the first shaft member 11 and the second shaft member 12. Furthermore, the rotation control unit 252 rotates the first shaft member 11 and the second shaft member 12 in a set pattern in the heating process.

The setting unit 23, the detection unit 24, and the control unit 25 are each configured by use of a processor, such as a central processing unit (CPU), or a processor that is any one of various arithmetic circuits that execute specific functions, such as an application specific integrated circuit (ASIC), for example.

The storage unit 26 stores therein, for example, a program (for example, a program executed in the heating process) for the control unit 25 to executes various kinds of operation. Furthermore, the storage unit 26 has a heating condition storage unit 261 that stores heating conditions for hardening of the coil spring 100 and programs and parameters for the heating process, and a rotation condition storage unit 262 that stores rotation conditions for the rotation control of the coil spring 100 and programs and parameters for the rotation control. The storage unit 26 is configured by use of a volatile memory or a non-volatile memory, or is configured of a combination of a volatile memory and a non-volatile memory. For example, the storage unit 26 is configured by use of a random access memory (RAM) and a read only memory (ROM).

The heating process for the coil spring 100 by the heating system 1 will be described next by reference to FIG. 3. FIG. 3 is a flowchart illustrating the heating method according to the first embodiment of the present invention. Each unit is hereinafter assumed to operate under control by the control apparatus 20.

Firstly, the coil spring 100 is set in the heating apparatus 10 (Step S101). Specifically, the one end of the coil spring 100 is grasped by the grasping portion 112 and the shaft body 110 and the other end is grasped by the grasping portion 122 and the shaft body 120. Both of these ends of the coil spring 100 are thereby fixed to the first shaft member 11 and the second shaft member 12.

After the coil spring 100 has been set, the energization control unit 251 starts passing an electric current through the first shaft member 11 and the second shaft member 12 (Step S102). The energization control unit 251 is triggered by an energization start instruction received by the input unit 21 to start energization control. Energization results in flow of an electric current through the coil spring 100 via the first shaft member 11 and the second shaft member 12 and generation of heat. This heat heats up the coil spring. The energization control unit 251 performs control of passing an electric current to the first shaft member 11 and the second shaft member 12, the electric current causing the heated temperature of the coil spring 100 to rise to the heating temperature set by the setting unit 23.

Furthermore, with the start of the energization control, the rotation control unit 252 starts rotation of the first shaft member 11 and the second shaft member 12 (Step S103). The rotation control unit 252 rotates the shaft bodies 110 and 120 at the rotation velocity and rotation angle that have been set. The rotation control unit 252 rotates the shaft bodies 110 and 120 such that the shaft bodies 110 and 120 operate in synchronization with each other. For example, the rotation velocity is set based on variation in spaces between coils of a wire of the coil spring 100 and/or variation in diameters of the coils of the coil spring 100.

The rotation may be started at the same time as the start of the energization or may be started after elapse of a set time period from the start of the energization.

The energization control unit 251 determines whether or not the temperature of the coil spring 100 has reached the set temperature (Step S104). In a case where the energization control unit 251 determines, based on the temperature detected by the detection unit 24, that the temperature of the coil spring 100 has not reached the set temperature (Step S104: No), the energization control unit 251 repeats the check of the temperature. On the contrary, in a case where the energization control unit 251 determines that the temperature of the coil spring 100 has reached the set temperature (Step S104: Yes), the energization control unit 251 proceeds to Step S105. The set temperature is set to a temperature equal to or higher than a transformation temperature of the material forming the coil spring 100.

At Step S105, the energization control unit 251 ends passing the electric current through the shaft members.

In response to the ending of the energization, the rotation control unit 252 rotates the shaft bodies 110 and 120 to move positions of the grasping portions 112 and 122 to set positions that have been set beforehand and the heating process is thereby ended (Step S106). The set positions herein are, for examples, positions for conveying the coil spring 100 to a process subsequent to the heating process. Specifically, positions where the coil spring 100 is easily grasped by a conveyance arm are set, for example.

The energization and the rotation may be ended at the same time or the rotation may be ended first.

In the above described first embodiment, the end portions of the coil spring are fixed by being respectively grasped by the outer peripheral surfaces of the shaft bodies, the shaft members are rotated while the coil spring 100 is energized via the shaft bodies, and the coil spring 100 is heated while being rotated. The first embodiment implements uniform heating of the coil spring by rotation of the coil spring 100 during heating and thereby enables minimization of variation in spaces between the coils of the wire of the coil spring and variation in the diameters of the coils formed by winding.

### First Modified Example of First Embodiment

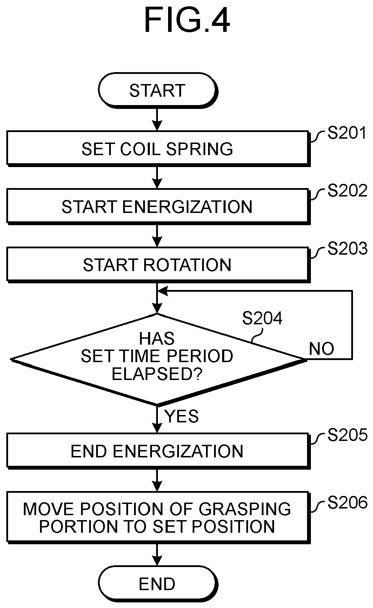

A first modified example the first embodiment of the present invention will be described next by reference to FIG. 4. A heating system according to the first modified example is similar to the heating system according to the embodiment and description thereof will thus be omitted. FIG. 4 is a flowchart illustrating a heating method according to the first modified example of the present invention. Each unit is hereinafter assumed to operate under control by the control apparatus 20. In this modified example, the detection unit 24 is assumed to detect an energization time period.

In the first modified example, similarly to Steps S101 to S103 illustrated in FIG. 3, the coil spring 100 is set in the heating apparatus 10 and passage of an electric current through and rotation of the first shaft member 11 and the second shaft member 12 are started (Steps S201 to S203).

Thereafter, the energization control unit 251 determines whether or not the energization time period has reached a set time period that has been set beforehand (Step S204). In a case where the energization control unit 251 determines, based on the energization time period detected by the detection unit 24, that the energization time period has not reached the set time period (Step S204: No), the energization control unit 251 repeats the check of the time elapsed. On the contrary, in a case where the energization control unit 251 determines that the energization time period has reached the set time period (Step S204: Yes), the energization control unit 251 proceeds to Step S205. A time period is set as the set time period set then, for example, the time period being a time period required for the coil spring 100 to reach the temperature equal to or higher than the transformation temperature of the material forming the coil spring 100.

At Step S205, the energization control unit 251 ends passing the electric current through the shaft members.

In response to the ending of the energization, the rotation control unit 252 rotates the shaft bodies 110 and 120 to move positions of the grasping portions 112 and 122 to set positions that have been set beforehand and the heating process is thereby ended (Step S206).

The energization and the rotation may be ended at the same time or the rotation may be ended first.

In the above described first modified example, similarly to the embodiment, the end portions of the coil spring are fixed by being respectively grasped by the outer peripheral surfaces of the shaft bodies, the shaft members are rotated while the coil spring 100 is energized via the shaft bodies, and the coil spring 100 is heated while being rotated. The first modified example implements uniform heating of the coil spring by rotation of the coil spring 100 during heating and thereby enables minimization of variation in the spaces between the coils of the wire of the coil spring and variation in the diameters of the coils formed by the winding.

### Second Modified Example of First Embodiment

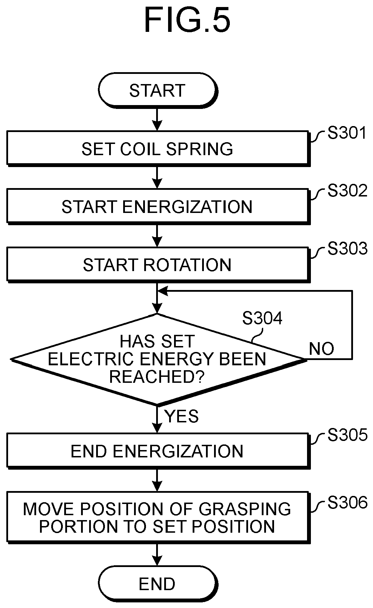

A second modified example the first embodiment of the present invention will be described next by reference to FIG. 5. A heating system according to the second modified example is similar to the heating system according to the embodiment and description thereof will thus be omitted. FIG. 5 is a flowchart illustrating a heating method according to the second modified example of the present invention. Each unit is hereinafter assumed to operate under control by the control apparatus 20. In the second modified example, the detection unit 24 is assumed to detect energization electric energy (for example, total electric energy from a start of energization).

In the second modified example, similarly to Steps S101 to S103 illustrated in FIG. 3, the coil spring 100 is set in the heating apparatus 10 and passage of an electric current through and rotation of the first shaft member 11 and the second shaft member 12 are started (Steps S301 to S303).

Thereafter, the energization control unit 251 determines whether or not the energization electric energy has reached set electric energy that has been set beforehand (Step S304). In a case where the energization control unit 251 determines, based on the energization electric energy detected by the detection unit 24, that the energization electric energy has not reached the set electric energy (Step S304: No), the energization control unit 251 repeats the check of the energization electric energy. On the contrary, in a case where the energization control unit 251 determines that the energization electric energy has reached the set energization energy (Step S304: Yes), the energization control unit 251 proceeds to Step S305. Electric energy (for example, total electric energy) is set as the set electric energy set then, for example, the electric energy being electric energy required for the coil spring 100 to reach the temperature equal to or higher than the transformation temperature of the material forming the coil spring 100.

At Step S305, the energization control unit 251 ends passing the electric current through the shaft members.

In response to the ending of the energization, the rotation control unit 252 rotates the shaft bodies 110 and 120 to move positions of the grasping portions 112 and 122 to set positions that have been set beforehand and the heating process is thereby ended (Step S306).

The energization and the rotation may be ended at the same time or the rotation may be ended first.

In the above described second modified example, similarly to the embodiment, the end portions of the coil spring are fixed by being respectively grasped by the outer peripheral surfaces of the shaft bodies, the shaft members are rotated while the coil spring 100 is energized via the shaft bodies, and the coil spring 100 is heated while being rotated. The second modified example implements uniform heating of the coil spring by rotation of the coil spring 100 during heating and thereby enables minimization of variation in the spaces between the coils of the wire of the coil spring and variation in the diameters of the coils formed by the winding.

In the example illustrated for description of the first embodiment, the grasping portions 112 and 122 are positioned above the shaft bodies (see FIG. 2, for example), but positions of the end portions of the coil spring 100 differ in accordance with the number of turns of the coil spring 100, for example, and positions (for example, the reference position P_{S}) of the grasping portions 112 and 122 thus change in accordance with the shape and the number of turns of the coil spring 100 to be held, for example.

Furthermore, in the example described with respect to the first embodiment and the modified examples, reciprocation centered on the reference position, that is, rotary operation by reversal of the rotation direction is repeated, but without being limited to this example, a configuration to cause rotation in the same direction may be adopted, for example.

Furthermore, in the example described with respect to the first embodiment and the modified examples, the shaft members rotate in perfect synchronization, but the shaft members may rotate in accordance with deformation of the coil spring 100 resulting from the heating.

### Second Embodiment

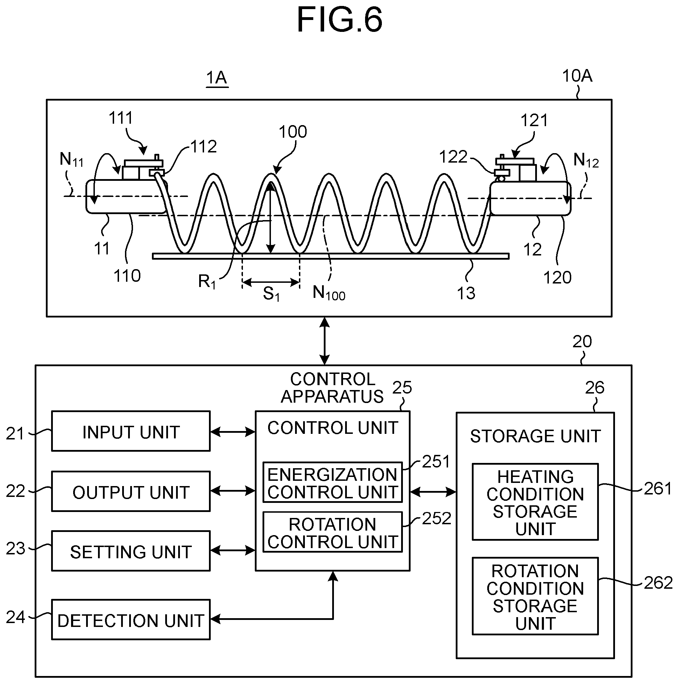

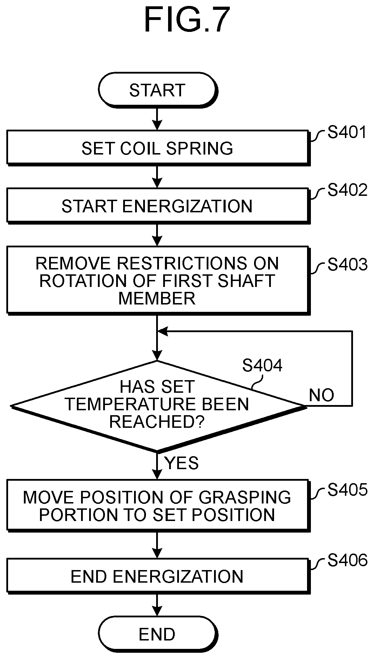

A second embodiment of the present invention will be described next by reference to FIG. 6 and FIG. 7. FIG. 6 is a diagram illustrating a schematic configuration of a heating system according to the second embodiment of the present invention. A heating system 1A according to the second embodiment is configured to include a heating apparatus 10A instead of the heating apparatus 10. A control apparatus 20 has the same configuration as that of the first embodiment and description thereof will thus be omitted. In the second embodiment, a shaft body 120 is assumed to not rotate. Furthermore, the rotation position and the amount of rotation of a shaft body 110 are not restricted and the shaft body 110 rotates about a rotation axis N₁₁. Specifically, the shaft body 110 may rotate to a position past the position P_{R} or the position P_{L}, from the reference position P_{S} illustrated in FIG. 2. Furthermore, the rotation control unit 252 executes rotation control of a first shaft member 11 in a heating process.

The heating apparatus 10A includes the first shaft member 11, a second shaft member 12, and a support member 13. The first shaft member 11 and the second shaft member 12 are similar to those of the first embodiment and description thereof will thus be omitted.

The support member 13 is a plate where a coil spring 100 is placed, the plate being configured to support the coil spring 100. The support member 13 may be moved up or down in a vertical direction according to positions of the first shaft member 11 and second shaft member 12 and a size of the coil spring 100. Furthermore, the support member 13 may be structured to support only a specific portion of the coil spring 100 (for example, a midportion of the coil spring 100).

A heating process for a coil spring by the heating system according to the second embodiment will be described next by reference to FIG. 7. FIG. 7 is a flowchart illustrating a heating method according to the second embodiment of the present invention. Each unit is hereinafter assumed to operate under control by the control apparatus 20.

In the heating process according to the second embodiment, similarly to Steps S101 and S102 of the first embodiment, the coil spring 100 is set in the heating apparatus 10A and the energization control unit 251 starts passing an electric current through the first shaft member 11 and the second shaft member 12 (Steps S401 and S402).

Furthermore, the rotation control unit 252 removes restrictions on rotation of the first shaft member 11 about the rotation axis N₁₁ (Step S403). The first shaft member 11 is thereby brought into a state where its rotation about the rotation axis N₁₁ is free.

The processing at Steps S402 and S403 may be not executed at the same time and Step S403 may be executed first. Furthermore, if the first shaft member 11 is already in the state where its rotation is free when the process has advanced to Step S403, Step S403 may be not executed.

In the heating process, the coil spring 100 is deformed by structure transformation, for example. The first shaft member 11 then rotates about the rotation axis N₁₁ in accordance with the deformation. This rotation enables escape of a load applied to the coil spring 100 in the deformation.

The rotation control unit 252 determines whether or not a temperature of the coil spring 100 has reached a set temperature (Step S404). In a case where the rotation control unit 252 determines, based on the temperature detected by the detection unit 24, that the temperature of the coil spring 100 has not reached the set temperature (Step S404: No), the rotation control unit 252 repeats the check of the temperature. On the contrary, in a case where the rotation control unit 252 determines that the temperature of the coil spring 100 has reached the set temperature (Step S404: Yes), the rotation control unit 252 proceeds to Step S405. The set temperature is set to a temperature equal to or higher than a transformation temperature of material forming the coil spring 100.

At Step S405, the rotation control unit 252 rotates the shaft body 110 to move the position of the grasping portion 112 to a set position that has been set beforehand. The set position is a position where the coil spring 100 is mounted before heating or a position corresponding to a position of the end portion of the coil spring 100 held by the second shaft member 12.

If a shape having required precision is able to be obtained, the process may be without execution of Step S405.

Thereafter, the energization control unit 251 ends passing the electric current through the first shaft member 11 and the second shaft member 12, and the heating process is thereby ended (Step S406).

The ending of the energization and the execution of the rotation process may be performed at the same time, or the rotation process may be executed first.

In the above described second embodiment, the end portions of the coil spring are fixed by being respectively grasped by the outer peripheral surfaces of the shaft bodies, the coil spring 100 is heated by energization via the shaft bodies, rotation of one of the shaft members is made free in heating, and the one of the shaft members is rotated in accordance with deformation of the coil spring 100, the deformation being associated with structure transformation. According to the second embodiment, escape of a load resulting from deformation upon structure deformation of the coil spring 100 caused in heating by energization and movement of the position of the end portion to the set position at the time the heating is ended enable minimization of variation in spaces (for example, a space S₁ illustrated in FIG. 1) between coils of the wire of the coil spring and variation in diameters (for example, a coil diameter R₁ illustrated in FIG. 1) of the coils formed by winding.

Furthermore, the second embodiment enables the shape precision to be increased even more because the first shaft member 11 is rotated such that the position of the end portion of the coil spring 100 is moved to an appropriate position in a case where the coil spring 100 has reached the transformation temperature.

### First Modified Example of Second Embodiment

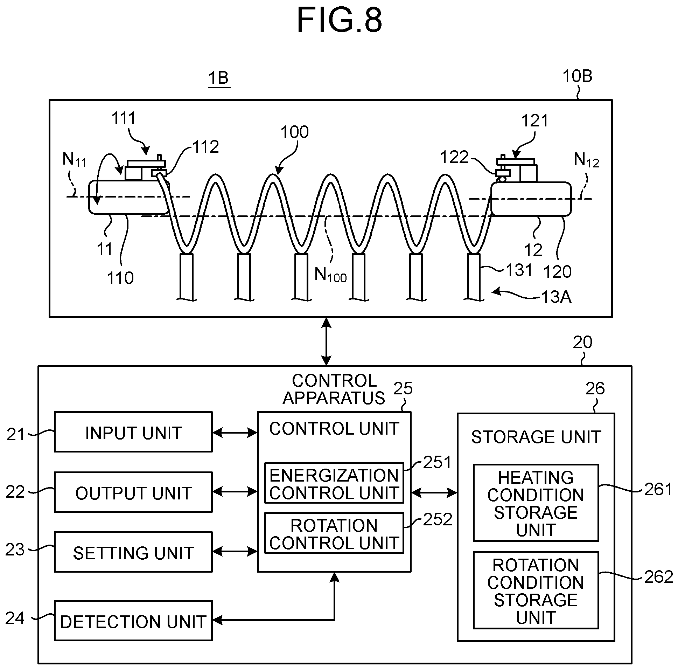

A first modified example of the second embodiment will be described next by reference to FIG. 8. FIG. 8 is a diagram illustrating a schematic configuration of a heating system according to the first modified example of the second embodiment of the present invention. A heating system 1B according to the first modified example includes a heating apparatus 10B instead of the heating apparatus 10A. A control apparatus 20 has the same configuration as that of the second embodiment and description thereof will thus be omitted.

The heating apparatus 10B includes a first shaft member 11, a second shaft member 12, and a support member 13A. The first shaft member 11 and the second shaft member 12 are similar to those of the second embodiment and description thereof will thus be omitted.

A coil spring 100 is placed on the support member 13A, and the support member 13A supports the coil spring 100. The support member 13A includes plural bar-like members 131 each extending in a bar shape and each having a distal end portion to support part of the coil spring 100. The support member 13A may be configured such that the bar-like members 131 are moved up or down in a vertical direction according to positions of the first shaft member 11 and second shaft member 12 and a size of the coil spring 100. Furthermore, the support member 13A may be structured to support only a specific portion of the coil spring 100 (for example, a midportion of the coil spring 100).

A heating process for the coil spring 100 by the heating system 1B is executed by a flow similar to that of the flowchart illustrated in FIG. 7.

In the above described first modified example, because the heating process is executed similarly to the second embodiment, escape of a load resulting from deformation upon structure deformation of the coil spring 100 caused in heating by energization and movement of the position of the end portion to the set position at the time the heating is ended enable minimization of variation in spaces between coils of a wire of the coil spring and variation in diameters of the coils formed by winding.

### Second Modified Example of Second Embodiment

A second modified example of the second embodiment of the present invention will be described next. A heating system according to the second modified example includes a measurement mechanism (not illustrated in the drawings) to measure a temperature of a coil spring 100 in the heating system 1A according to the second embodiment. In this second modified example, the detection unit 24 is assumed to detect an energization time period.

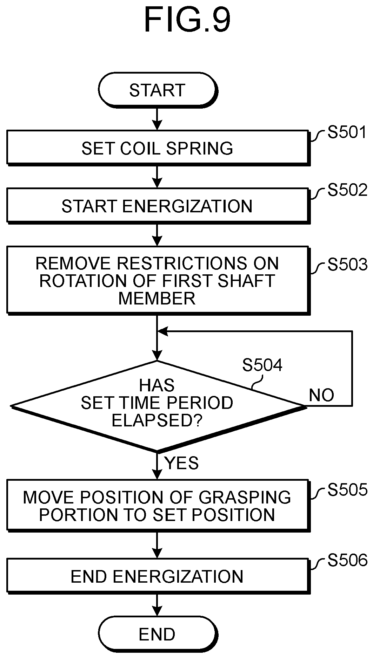

A heating process according to this second modified example will be described by reference to FIG. 9. FIG. 9 is a flowchart illustrating a heating method according to the second modified example of the second embodiment.

Firstly, similarly to Steps S401 and S402 illustrated in FIG. 7, the coil spring 100 is set in the heating apparatus 10A (Step S501) and passage of an electric current through the first shaft member 11 and the second shaft member 12 is started by the energization control unit 251 (Step S502).

Thereafter, the rotation control unit 252 removes restrictions on rotation of the first shaft member 11 about the rotation axis N₁₁ (Step S503). In a heating process, the coil spring 100 rotates about the rotation axis N₁₁ in accordance with deformation of the coil spring 100.

Thereafter, the rotation control unit 252 determines whether or not the energization time period has reached a set time period that has been set beforehand (Step S504). In a case where the rotation control unit 252 determines, based on the energization time period detected by the detection unit 24, that the energization time period has not reached the set time period (Step S504: No), the rotation control unit 252 repeats the check of the energization time period. On the contrary, in a case where the rotation control unit 252 determines that the energization time period has reached the set time period (Step S504: Yes), the rotation control unit 252 proceeds to Step S505. A time period is set as the set time period set then, for example, the time period being a time period required for the coil spring 100 to reach a temperature equal to or higher than a transformation temperature of material forming the coil spring 100.

At Step S505, the rotation control unit 252 rotates the shaft body 110 to move the position of the grasping portion 112 to a set position that has been set beforehand.

If a shape having required precision is able to be obtained, the process may be without execution of Step S505.

Thereafter, the energization control unit 251 ends passing the electric current through the rotation axis (Step S506).

In the above described second modified example, because the heating process is executed similarly to the second embodiment, escape of a load resulting from deformation upon structure deformation of the coil spring 100 caused in heating by energization and movement of the position of the end portion to the set position at the time the heating is ended enable minimization of variation in spaces between coils of a wire of the coil spring and variation in diameters of the coils formed by winding.

### Third Modified Example of Second Embodiment

A third modified example of the second embodiment of the present invention will be described next. A heating system according to the third modified example includes a measurement mechanism (not illustrated in the drawings) to measure a temperature of the coil spring 100 in the heating system 1A according to the second embodiment. In the third modified example, the detection unit 24 is assumed to detect electric energy (for example, total electric energy from a start of energization).

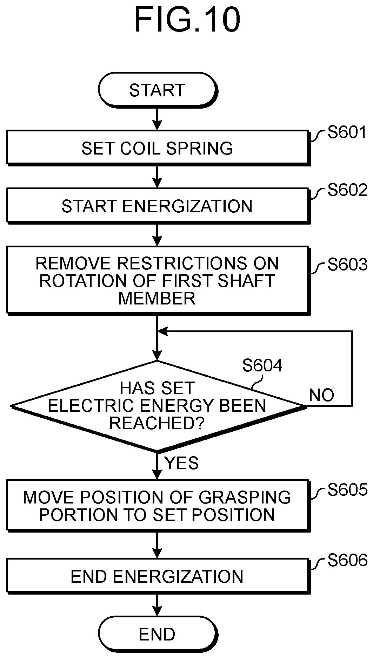

A heating process according to the third modified example will be described by reference to FIG. 10. FIG. 10 is a flowchart illustrating a heating method according to the third modified example of the second embodiment.

Firstly, similarly to Steps S401 and S402 illustrated in FIG. 7, the coil spring 100 is set in the heating apparatus 10 (Step S601) and passage of an electric current through the first shaft member 11 and the second shaft member 12 is started by the energization control unit 251 (Step S602).

Thereafter, the rotation control unit 252 removes restrictions on rotation of the first shaft member 11 about the rotation axis N₁₁ (Step S603). In a heating process, the coil spring 100 rotates about the rotation axis N₁₁ in accordance with deformation of the coil spring 100.

Thereafter, the rotation control unit 252 determines whether or not the energization electric energy has reached set electric energy that has been set beforehand (Step S604). In a case where the rotation control unit 252 determines, based on the energization electric energy detected by the detection unit 24, that the energization electric energy has not reached the set electric energy (Step S604: No), the rotation control unit 252 repeats the check of the energization electric energy. On the contrary, in a case where the rotation control unit 252 determines that the energization electric energy has reached the set energization energy (Step S604: Yes), the rotation control unit 252 proceeds to Step S605. Electric energy (for example, total electric energy) is set as the set electric energy set then, for example, the electric energy being electric energy required for the coil spring 100 to reach a temperature equal to or higher than a transformation temperature of material forming the coil spring 100.

At Step S605, the rotation control unit 252 rotates the shaft body 110 to move the position of the grasping portion 112 to a set position that has been set beforehand.

Thereafter, the energization control unit 251 ends passing the electric current through the rotation axis (Step S606).

In the above described third modified example, because the heating process is executed similarly to the second embodiment, escape of a load resulting from deformation upon structure deformation of the coil spring 100 caused in heating by energization and movement of the position of the end portion to the set position at the time the heating is ended enable minimization of variation in spaces between coils of a wire of the coil spring and variation in diameters of the coils formed by winding.

Modes for implementing the present invention have been described thus far, but the present invention is not to be limited only to the above described first and second embodiments and their modified examples. In the example described with respect to the second embodiment, the second shaft member 12 does not rotate but the second shaft member 12 may be configured to rotate or both the first shaft member 11 and the second shaft member 12 may be configured to be rotatable. In a case where both of the shaft members are configured to be rotatable, for example, at Step S105, at least one of the shaft members is rotated so that the position of the spring holding unit of one of the shaft members and the position of the spring holding unit of the other shaft member will be at positions corresponding to a design.

Furthermore, in the example described with respect to the first and second embodiments and their modified examples, the stoppage or continuation is determined by use of one of a temperature, a heating time period, and electric energy, but without being limited to this example, the control may be performed by combination of a temperature, a time period, and electric energy.

The present invention may thus include various embodiments not described herein, and various design changes, for example, may be made without departing from the scope of the invention as defined by the appended claims.

### Industrial Applicability

As described above, a heating method and a heating system according to the present invention are suitable for minimizing variation in spaces between coils of a wire of a coil spring and variation in diameters of the coils formed by winding.

### Reference Signs List

- 1, 1A, 1B: HEATING SYSTEM
- 10, 10A, 10B: HEATING APPARATUS
- 11: FIRST SHAFT MEMBER
- 12: SECOND SHAFT MEMBER
- 13, 13A: SUPPORT MEMBER
- 20: CONTROL APPARATUS
- 21: INPUT UNIT
- 22: OUTPUT UNIT
- 23: SETTING UNIT
- 24: DETECTION UNIT
- 25: CONTROL UNIT
- 26: STORAGE UNIT
- 251: ENERGIZATION CONTROL UNIT
- 252: ROTATION CONTROL UNIT
- 261: HEATING CONDITION STORAGE UNIT
- 262: ROTATION CONDITION STORAGE UNIT

## Claims

1. A heating method for hardening a coil spring (100), the heating method comprising:
a fixing step of fixing one end of the coil spring (100) to an outer peripheral surface of a first shaft member (11) and fixing another end of the coil spring (100) to an outer peripheral surface of a second shaft member (12);
a heating step of energizing the first and second shaft members (11, 12) to heat up the coil spring (100); and
a rotating step of rotating each of the first and second shaft members (11, 12) in a state where the first and second shaft members (11, 12) are being energized, wherein
rotation axes (N11, N12) of the first and second shaft members (11, 12) are positioned on a same straight line that is at an angle of 0 degrees or more and 30 degrees or less to a horizontal direction, and
a central axis (N100) of the coil spring (100) that has been mounted on the first and second shaft members (11, 12) is parallel to the straight line,
wherein the coil spring (100) is held only by the first and second shaft members (11, 12) without contacting a support member.

2. The heating method according to claim 1, wherein the heating step and the rotating step are stopped based on a set temperature set to a temperature equal to or higher than a transformation temperature of material forming the coil spring (100).

3. The heating method according to claim 1, wherein in the rotating step, the first and second shaft members (11, 12) are rotated at a rotation velocity set based on at least one of variation in spaces between coils of a wire of the coil spring (100) and variation in coil diameters of the coil spring (100).

4. The heating method according to claim 1 or 2, wherein in the fixing step, the coil spring (100) is fixed such that the central axis (N100) of the coil spring (100) is at a position not aligned with the straight line.

5. A heating system for hardening a coil spring (100), the heating system comprising:
a first shaft member (11) configured to be rotatable about a central axis (N100) extending in a longitudinal direction thereof and grasp one end of the coil spring (100);
a second shaft member (12) configured to be rotatable about a central axis (N100) extending in a longitudinal direction thereof and grasp another end of the coil spring (100); and
a control apparatus (20) configured to control passage of an electric current through the first and second shaft members (11, 12) and rotation of the first and second shaft members (11, 12), wherein
rotation axes (N11, N12) of the first and second shaft members (11, 12) are positioned on a same straight line that is at an angle of 0 degrees or more and 30 degrees or less to a horizontal direction, and
a central axis (N100) of the coil spring (100) that has been mounted on the first and second shaft members (11, 12) is parallel to the straight line,
wherein the coil spring (100) is held only by the first and second shaft members (11, 12) without contacting a support member.

6. A heating method for hardening a coil spring (100), the heating method comprising:
a fixing step of
placing the coil spring (100) on a support member (13, 13A),
fixing one end of the coil spring (100) to an outer peripheral surface of a first shaft member (11) that is rotatable, and
fixing another end of the coil spring (100) to an outer peripheral surface of a second shaft member (12);
a heating step of energizing the first and second shaft members (11, 12) to heat up the coil spring (100); and
a rotating step of rotating the first shaft member (11) to move the one end of the coil spring (100) to a preset position, wherein
rotation axes (N11, N12) of the first and second shaft members (11, 12) are positioned on a same straight line that is at an angle of 0 degrees or more and 30 degrees or less to a horizontal direction, and
a central axis (N100) of the coil spring (100) that has been mounted on the first and second shaft members (11, 12) and supported by the support member (13, 13A) is parallel to the straight line,
wherein in the fixing step, the coil spring (100) is fixed such that the central axis (N100) of the coil spring (100) is at a position not aligned with the straight line.

7. The heating method according to claim 6, wherein in the rotating step, the first shaft member (11) is rotated in a case where a temperature of the coil spring (100) has reached a set temperature set to a temperature equal to or higher than a transformation temperature of material forming the coil spring (100).

8. A heating system for hardening a coil spring (100), the heating system comprising:
a first shaft member (11) configured to be rotatable about a rotation axis (N11) extending in a longitudinal direction thereof and grasp one end of the coil spring (100);
a second shaft member (12) extending in a longitudinal axis direction and configured to grasp another end of the coil spring (100); and
a control apparatus (20) configured to control passage of an electric current through the first and second shaft members (11, 12) and rotation of the first shaft member (11), wherein
a rotation axis (N11) of the first shaft member (11) and a longitudinal axis of the second shaft member (12) are positioned on a same straight line that is at an angle of 0 degrees or more and 30 degrees or less to a horizontal direction,
a central axis (N100) of the coil spring (100) that has been mounted on the first and second shaft members (11, 12) is parallel to the straight line, and
the control apparatus (20) is configured to
remove restrictions on the rotation of the first shaft member (11) when heating of the coil spring (100) is started, and
move the one end of the coil spring (100) to a preset position before a heating process is ended,
wherein the coil spring (100) is fixed such that the central axis (N100) of the coil spring (100) is at a position not aligned with the straight line.

## Patentansprüche

1. Heizverfahren zum Härten einer Schraubenfeder (100), wobei das Heizverfahren Folgendes umfasst:
einen Fixierschritt des Fixierens von einem Ende der Schraubenfeder (100) an einer Außenumfangsoberfläche eines ersten Schaftelements (11) und Fixieren eines anderen Endes der Schraubenfeder (100) an einer Außenumfangsoberfläche eines zweiten Schaftelements (12);
einen Heizschritt des elektrisch Beaufschlagens des ersten und zweiten Schaftelements (11, 12), um die Schraubenfeder (100) zu erhitzen; und
einen Rotationsschritt des Drehens von jedem des ersten und zweiten Schaftelements (11, 12) in einem Zustand, in dem das erste und zweite Schaftelement (11, 12) elektrisch beaufschlagt sind, wobei
Rotationsachsen (N11, N12) des ersten und zweiten Schaftelements (11, 12) auf einer gleichen geraden Linie positioniert sind, die in einem Winkel von 0 Grad oder mehr und 30 Grad oder weniger zu einer horizontalen Richtung steht, und
eine Mittelachse (N100) der Schraubenfeder (100), die auf dem ersten und zweiten Schaftelement (11, 12) montiert wurde, parallel zu der geraden Linie steht,
wobei die Schraubenfeder (100) nur durch das erste und zweite Schaftelement (11, 12) gehalten wird, ohne ein Stützelement zu berühren.

2. Heizverfahren nach Anspruch 1, wobei der Heizschritt und der Rotationsschritt basierend auf einer Solltemperatur angehalten werden, die auf eine Temperatur eingestellt ist, die gleich oder höher als eine Umwandlungstemperatur von Material ist, das die Schraubenfeder (100) bildet.

3. Heizverfahren nach Anspruch 1, wobei im Rotationsschritt das erste und zweite Schaftelement (11, 12) mit einer Rotationsgeschwindigkeit gedreht werden, die basierend auf mindestens einem von Variation von Abständen zwischen Windungen eines Drahts der Schraubenfeder (100) und Variation von Windungsdurchmessern der Schraubenfeder (100) eingestellt ist.

4. Heizverfahren nach Anspruch 1 oder 2, wobei im Fixierschritt die Schraubenfeder (100) so fixiert wird, dass sich die Mittelachse (N100) der Schraubenfeder (100) an einer Position befindet, die nicht mit der geraden Linie ausgerichtet ist.

5. Heizsystem zum Härten einer Schraubenfeder (100), wobei das Heizsystem Folgendes umfasst:
ein erstes Schaftelement (11), das so ausgebildet ist, dass es um eine Mittelachse (N100) drehbar ist, die sich in einer Längsrichtung davon erstreckt und ein Ende der Schraubenfeder (100) erfasst;
ein zweites Schaftelement (12), das so ausgebildet ist, dass es um eine Mittelachse (N100) drehbar ist, die sich in einer Längsrichtung davon erstreckt und ein anderes Ende der Schraubenfeder (100) erfasst; und
eine Steuereinrichtung (20), die so ausgebildet ist, dass sie Durchfluss eines elektrischen Stroms durch das erste und zweite Schaftelement (11, 12) und Drehung des ersten und zweiten Schaftelements (11, 12) steuert, wobei
Rotationsachsen (N11, N12) des ersten und zweiten Schaftelements (11, 12) auf einer gleichen geraden Linie positioniert sind, die in einem Winkel von 0 Grad oder mehr und 30 Grad oder weniger zu einer horizontalen Richtung steht, und
eine Mittelachse (N100) der Schraubenfeder (100), die auf dem ersten und zweiten Schaftelement (11, 12) montiert wurde, parallel zu der geraden Linie steht, wobei die Schraubenfeder (100) nur durch das erste und zweite Schaftelement (11, 12) gehalten wird, ohne ein Stützelement zu berühren.

6. Heizverfahren zum Härten einer Schraubenfeder (100), wobei das Heizverfahren Folgendes umfasst:
einen Fixierschritt des
Platzierens der Schraubenfeder (100) auf einem Stützelement (13, 13A), Fixierens von einem Ende der Schraubenfeder (100) an einer Außenumfangsoberfläche eines ersten Schaftelements (11), das drehbar ist, und
Fixierens eines anderen Endes der Schraubenfeder (100) an einer Außenumfangsoberfläche eines zweiten Schaftelements (12);
einen Heizschritt von elektrischem Beaufschlagen des ersten und zweiten Schaftelements (11, 12), um die Schraubenfeder (100) zu erhitzen; und
einen Rotationsschritt des Drehens des ersten Schaftelements (11), um das eine Ende der Schraubenfeder (100) zu einer voreingestellten Position zu bewegen, wobei
Rotationsachsen (N11, N12) des ersten und zweiten Schaftelements (11, 12) auf einer gleichen geraden Linie positioniert sind, die in einem Winkel von 0 Grad oder mehr und 30 Grad oder weniger zu einer horizontalen Richtung steht, und
eine Mittelachse (N100) der Schraubenfeder (100), die auf dem ersten und zweiten Schaftelement (11, 12, 13A) montiert wurde und vom Stützelement (13, 13A) gestützt wird, parallel zu der geraden Linie ist,
wobei im Fixierschritt die Schraubenfeder (100) so fixiert wird, dass sich die Mittelachse (N100) der Schraubenfeder (100) an einer Position befindet, die nicht mit der geraden Linie ausgerichtet ist.

7. Heizverfahren nach Anspruch 6, wobei im Rotationsschritt das erste Schaftelement (11) gedreht wird, wenn eine Temperatur der Schraubenfeder (100) eine Solltemperatur erreicht hat, die auf eine Temperatur eingestellt wurde, die gleich oder höher als eine Umwandlungstemperatur von Material ist, das die Schraubenfeder (100) bildet.

8. Heizsystem zum Härten einer Schraubenfeder (100), wobei das Heizsystem Folgendes umfasst:
ein erstes Schaftelement (11), das so ausgebildet ist, dass es um eine Rotationsachse (N11) drehbar ist, die sich in einer Längsrichtung davon erstreckt und ein Ende der Schraubenfeder (100) erfasst;
ein zweites Schaftelement (12), das sich in einer Längsachsenrichtung erstreckt und so ausgebildet ist, dass es ein anderes Ende der Schraubenfeder (100) erfasst; und
eine Steuereinrichtung (20), die so ausgebildet ist, dass sie Durchfluss eines elektrischen Stroms durch das erste und zweite Schaftelement (11, 12) und Drehung des ersten Schaftelements (11) steuert, wobei
eine Rotationsachse (N11) des ersten Schaftelements (11) und eine Längsachse des zweiten Schaftelements (12) auf einer gleichen geraden Linie positioniert sind, die in einem Winkel von 0 Grad oder mehr und 30 Grad oder weniger zur horizontalen Richtung steht,
eine Mittelachse (N100) der Schraubenfeder (100), die auf dem ersten und zweiten Schaftelement (11, 12) montiert wurde, parallel zu der geraden Linie ist, und
die Steuereinrichtung (20) so ausgebildet ist, dass sie
Einschränkungen der Drehung des ersten Schaftelements (11) aufhebt, wenn Erwärmen der Schraubenfeder (100) begonnen hat, und
das eine Ende der Schraubenfeder (100) zu einer voreingestellten Position bewegt, bevor ein Heizprozess beendet ist,
wobei die Schraubenfeder (100) so fixiert wird, dass sich die Mittelachse (N100) der Schraubenfeder (100) an einer Position befindet, die nicht mit der geraden Linie ausgerichtet ist.

## Revendications

1. Procédé de chauffage pour le durcissement d'un ressort hélicoïdal (100), le procédé de chauffage comprenant :
une étape de fixation consistant à fixer une extrémité du ressort hélicoïdal (100) à une surface périphérique extérieure d'un premier élément d'arbre (11) et à fixer une autre extrémité du ressort hélicoïdal (100) à une surface périphérique extérieure d'un second élément d'arbre (12) ;
une étape de chauffage consistant à faire passer un courant électrique dans les premier et second éléments d'arbre (11, 12) pour chauffer le ressort hélicoïdal (100) ; et
une étape de rotation consistant à faire tourner chacun des premier et second éléments d'arbre (11, 12) dans un état dans lequel les premier et second éléments d'arbre (11, 12) sont en train d'être alimentés en courant électrique, dans lequel
des axes de rotation (N11, N12) des premier et second éléments d'arbre (11, 12) sont positionnés sur une même droite qui est à un angle de 0 degré ou plus et de 30 degrés ou moins par rapport à une direction horizontale, et
un axe central (N100) du ressort hélicoïdal (100) qui a été monté sur les premier et second éléments d'arbre (11, 12) est parallèle à la droite,
dans lequel le ressort hélicoïdal (100) est maintenu uniquement par les premier et second éléments d'arbre (11, 12) sans être en contact avec un élément de support.

2. Procédé de chauffage selon la revendication 1, dans lequel l'étape de chauffage et l'étape de rotation sont arrêtées sur la base d'une température de consigne réglée à une température égale ou supérieure à une température de transformation du matériau formant le ressort hélicoïdal (100).

3. Procédé de chauffage selon la revendication 1, dans lequel, dans l'étape de rotation, les premier et second éléments d'arbre (11, 12) sont tournés à une vitesse de rotation réglée sur la base d'au moins l'une de la variation des espaces entre spires d'un fil du ressort hélicoïdal (100) et de la variation des diamètres de spire du ressort hélicoïdal (100)

4. Procédé de chauffage selon la revendication 1 ou 2, dans lequel, dans l'étape de fixation, le ressort hélicoïdal (100) est fixé de telle sorte que l'axe central (N100) du ressort hélicoïdal (100) soit non aligné avec la droite.

5. Système de chauffage pour le durcissement d'un ressort hélicoïdal (100), le système de chauffage comprenant :
un premier élément d'arbre (11) configuré pour pouvoir tourner autour d'un axe central (N100) s'étendant dans sa direction longitudinale et saisir une extrémité du ressort hélicoïdal (100) ;
un second élément d'arbre (12) configuré pour pouvoir tourner autour d'un axe central (N100) s'étendant dans sa direction longitudinale et saisir une autre extrémité du ressort hélicoïdal (100) ; et
un appareil de commande (20) configuré pour commander le passage d'un courant électrique dans les premier et second éléments d'arbre (11, 12) et la rotation des premier et second éléments d'arbre (11, 12), dans lequel
des axes de rotation (N11, N12) des premier et second éléments d'arbre (11, 12) sont positionnés sur une même droite qui est à un angle de 0 degré ou plus et de 30 degrés ou moins par rapport à une direction horizontale, et
un axe central (N100) du ressort hélicoïdal (100) qui a été monté sur les premier et second éléments d'arbre (11, 12) est parallèle à la droite,
dans lequel le ressort hélicoïdal (100) est maintenu uniquement par les premier et second éléments d'arbre (11, 12) sans être en contact avec un élément de support.

6. Procédé de chauffage pour le durcissement d'un ressort hélicoïdal (100), le procédé de chauffage comprenant :
une étape de fixation consistant à
placer le ressort hélicoïdal (100) sur un élément de support (13, 13A),
fixer une extrémité du ressort hélicoïdal (100) à une surface périphérique extérieure d'un premier élément d'arbre (11) qui peut tourner, et
fixer une autre extrémité du ressort hélicoïdal (100) à une surface périphérique extérieure d'un second élément d'arbre (12) ;
une étape de chauffage consistant à faire passer un courant électrique dans les premier et second éléments d'arbre (11, 12) pour chauffer le ressort hélicoïdal (100) ; et
une étape de rotation consistant à faire tourner le premier élément d'arbre (11) pour déplacer ladite extrémité du ressort hélicoïdal (100) vers une position prédéfinie, dans lequel
des axes de rotation (N11, N12) des premier et second éléments d'arbre (11, 12) sont positionnés sur une même droite qui est à un angle de 0 degré ou plus et de 30 degrés ou moins par rapport à une direction horizontale, et
un axe central (N100) du ressort hélicoïdal (100) qui a été monté sur les premier et second éléments d'arbre (11, 12) et supporté par l'élément de support (13, 13A) est parallèle à la droite,
dans lequel, dans l'étape de fixation, le ressort hélicoïdal (100) est fixé de telle sorte que l'axe central (N100) du ressort hélicoïdal (100) soit non aligné avec la droite.

7. Procédé de chauffage selon la revendication 6, dans lequel, dans l'étape de rotation, le premier élément d'arbre (11) est tourné dans le cas où une température du ressort hélicoïdal (100) a atteint une température de consigne réglée à une température égale ou supérieure à une température de transformation du matériau formant le ressort hélicoïdal (100)

8. Système de chauffage pour le durcissement d'un ressort hélicoïdal (100), le système de chauffage comprenant :
un premier élément d'arbre (11) configuré pour pouvoir tourner autour d'un axe de rotation (N11) s'étendant dans sa direction longitudinale et saisir une extrémité du ressort hélicoïdal (100) ;
un second élément d'arbre (12) s'étendant dans une direction d'axe longitudinal et configuré pour saisir une autre extrémité du ressort hélicoïdal (100) ; et
un appareil de commande (20) configuré pour commander le passage d'un courant électrique dans les premier et second éléments d'arbre (11, 12) et la rotation du premier élément d'arbre (11) dans lequel
un axe de rotation (N11) du premier élément d'arbre (11) et un axe longitudinal du second élément d'arbre (12) sont positionnés sur une même droite qui est à un angle de 0 degré ou plus et de 30 degrés ou moins par rapport à une direction horizontale,
un axe central (N100) du ressort hélicoïdal (100) qui a été monté sur les premier et second éléments d'arbre (11, 12) est parallèle à la droite, et
l'appareil de commande (20) est configuré pour
lever les restrictions à la rotation du premier élément d'arbre (11) lorsque le chauffage du ressort hélicoïdal (100) est démarré, et
déplacer ladite extrémité du ressort hélicoïdal (100) vers une position prédéfinie avant qu'un procédé de chauffage soit terminé,
dans lequel le ressort hélicoïdal (100) est fixé de telle sorte que l'axe central (N100) du ressort hélicoïdal (100) soit non aligné avec la droite.
